# EUROPEAN PATENT APPLICATION

(11) **EP 4 768 333 A1**
(43) Date of publication of application: **01.07.2026**
(21) Application number: 24864371.0
(22) Date of filing: 14.08.2024
(51) Int. Cl.: B60N 2/56, B60N 2/58, B60N 2/62, B60N 2/64, B60N 2/66, B60N 2/70

(54) **SEAT AND VEHICLE**

(30) Priority: 11.09.2023 CN 202322465657 U; 26.09.2023 CN 202322630820 U
(71) Applicant: Yinwang Intelligent Technologies Co., Ltd., Shenzhen, Guangdong 518129 (CN)
(72) Inventor: XU, Hao, Shenzhen, Guangdong 518129 (CN); WANG, Yuzeng, Shenzhen, Guangdong 518129 (CN); WANG, Tao, Shenzhen, Guangdong 518129 (CN); LI, Jinming, Shenzhen, Guangdong 518129 (CN); KONG, Dezhao, Shenzhen, Guangdong 518129 (CN); YU, Long, Shenzhen, Guangdong 518129 (CN); SHI, Hao, Shenzhen, Guangdong 518129 (CN); ZHU, Xin, Shenzhen, Guangdong 518129 (CN)
(74) Representative: Pfenning, Meinig & Partner mbB
(86) International application number: PCT/CN2024/112071
(87) International publication number: WO 2025/055648

(57) **Abstract**

This application provides a seat and a vehicle. The seat includes an upholstery layer, a foamed layer, and a framework support layer. The foamed layer is located between the upholstery layer and the framework support layer. The upholstery layer includes a first layer and a second layer, where the first layer is a leather material, a polyurethane material, a polyvinyl chloride material, or a braided material, and the second layer is a composite layer of ventilation sponges. The foamed layer includes a third layer and a fourth layer, where the third layer is a high-elasticity sponge and the fourth layer is supportive foam. According to embodiments of this application, driving and ride experience of a user can be improved.

## Description

This application claims priority to Chinese Patent Application No. 202322465657.2, filed with the China National Intellectual Property Administration on September 11, 2023 and entitled "SEAT AND VEHICLE", and Chinese Patent Application No. 202322630820.6, filed with the China National Intellectual Property Administration on September 26, 2023 and entitled "SEAT AND VEHICLE", which are incorporated herein by reference in their entireties.

### TECHNICAL FIELD

This application relates to the field of vehicle technologies, and in particular, to a seat and a vehicle.

### BACKGROUND

Seats of a vehicle are the only parts that are directly in contact with human bodies throughout an entire process in which passengers use the vehicle. With development of the vehicle industry and an increasing frequency of use of vehicles by users, users pose increasingly higher demands for driving and ride experience with the vehicles. Therefore, how to improve comfort of the seats is a technical problem for persons skilled in the art.

### SUMMARY

This application provides a seat and a vehicle, to improve driving and ride experience.

According to a first aspect, this application provides a seat. The seat includes an upholstery layer, a foamed layer, and a framework support layer, and the foamed layer is located between the upholstery layer and the framework support layer;
the upholstery layer includes a first layer and a second layer, the first layer includes a leather material, a polyurethane material, a polyvinyl chloride material, or a braided material, and the second layer is a first sponge; and
the foamed layer includes a third layer and a fourth layer, the third layer includes a second sponge, and the fourth layer includes foam.

Optionally, the braided material is, for example, cotton, flax, plant fiber, man-made fiber, wool, or the like.

Optionally, the foam in the fourth layer is foamed resin, polyethylene foam, or the like.

In the foregoing solution, the upholstery layer includes the first layer using soft surface material, the soft sponge (namely, the first sponge) is composited on the surface material of the first layer, and the soft second sponge is further disposed in the foamed layer beneath the upholstery layer, thereby implementing a proper soft feeling of a surface of the seat. In addition, foam is arranged beneath the second sponge. The foam may be, for example, foamed resin or polyethylene foam, and may provide proper support, thereby improving comfort of the seat.

In a possible implementation, the third layer is closer to the upholstery layer than the fourth layer, and foaming hardness of the second sponge is less than foaming hardness of the foam.

In the foregoing solution, the upholstery layer is a laminated layer that can be in contact with a user. In comparison with the fourth layer, the third layer is closer to the upholstery layer, and the second sponge in the third layer is designed to have lower foaming hardness and become softer, thereby further providing the user with a soft feeling of the surface of the seat. In addition, the foam in the fourth layer is designed to have higher foaming hardness to provide stronger support, and the supportive foam beneath the second sponge can further provide support.

In a possible implementation, foaming hardness of the first sponge is less than the foaming hardness of the second sponge.

In the foregoing solution, the second layer is closer to the user. For this reason, the first sponge in the second layer is softer than the second sponge in the third layer, so that the user can have better ride experience.

In a possible implementation, the foamed layer further includes a fifth layer, and the fifth layer includes three-dimensional plastic braided fabric.

Optionally, the fifth layer is located between the third layer and the fourth layer.

In the foregoing solution, the foamed layer includes the three-dimensional plastic braided fabric, to provide both a strong support function and a ventilation function.

In a possible implementation, the upholstery layer or the foamed layer further includes a sixth layer, and the sixth layer includes a heating pad.

In the foregoing solution, the heating pad is added to the seat, to provide the user with a heating service, thereby improving user experience.

In a possible implementation, the foamed layer further includes a seventh layer, and the seventh layer includes a massage air bag.

In the foregoing solution, the massage air bag is added to the seat, to provide the user with a massage service, thereby improving user experience.

In a possible implementation, the seat includes a backrest. The backrest includes the upholstery layer, the foamed layer, and the framework support layer. The framework support layer of the backrest includes an eighth layer and/or a ninth layer, the eighth layer includes a lumbar support, and the ninth layer includes a backrest spring.

In the foregoing solution, the lumbar support and/or the backrest spring are added to the backrest, to provide the user with strong support, thereby improving user experience.

In a possible implementation, the seat includes a seat cushion. The seat cushion includes the upholstery layer, the foamed layer, and the framework support layer. The framework support layer of the seat cushion includes a suspension spring.

In the foregoing solution, the suspension spring is added to the seat cushion, to provide the user with strong support, thereby improving user experience.

In a possible implementation, the foam in the fourth layer is disposed in side wing areas of the seat, and the second sponge in the third layer is disposed in middle areas surrounded by the side wing areas.

In the foregoing solution, the soft second sponge is disposed in areas (middle areas of the backrest and the seat cushion) that are in contact with a human body, to ensure a soft feeling in the areas that are in contact with the human body. In the side wing area that provides a support function, foam with higher foaming hardness is arranged to implement proper wrapping performance of the seat, so that an outer side of a thigh and a side of the body are wrapped when a vehicle is making a turn, thereby providing the user with a proper lateral support force.

According to a second aspect, this application provides a vehicle. The vehicle includes the seat according to any one of the first aspect and the possible implementations of the first aspect.

### BRIEF DESCRIPTION OF DRAWINGS

FIG. 1 is a diagram of a laminated structure of a seat in a related technology;
FIG. 2 is a diagram of a seat according to an embodiment of this application;
FIG. 3 to FIG. 10 are diagrams of laminated structures of a seat according to an embodiment of this application; and
FIG. 11 and FIG. 12 are diagrams of a seat according to an embodiment of this application.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following: Only A exists, only B exists, or both A and B exist. A description manner like "at least one (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" is used, including a case of a single a, a single b, a single c, a combination of a and b, a combination of a and c, a combination of b and c, or a combination of a, b, and c.

In this application, terms such as "first" and "second" are used to distinguish between same or similar items that have basically same effects and functions. It should be understood that there is no logical or time sequence dependency between "first", "second", and "nth", and neither a quantity nor an execution sequence is limited. It should be further understood that although the following descriptions use terms such as "first" and "second" to describe various elements, these elements should not be limited by the terms. These terms are merely used to distinguish one element from another element.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

Comfort of a seat of a vehicle means seat performance that provides a user with comfortable and pleasant ride experience and a convenient and safe operation condition. Generally, the comfort of the seat includes static comfort, dynamic comfort and operation comfort. The static comfort means a degree of seating comfort in a stationary state. The dynamic comfort means a degree of comfort according to subjective perception of a driver or the user in the vehicle in a traveling state of the vehicle. The operation comfort means convenience of the driver or the user in the vehicle in operating various functional parts.

Three dimensions of perception of the comfort of the seat include softness of the seat, wrapping performance of the seat, and support performance of the seat. For the dimension of the softness of the seat, a soft touch feeling of the seat lays a foundation for the comfort of the seat. Factors affecting the softness of the seat mainly include hardness or the like of a seat upholstery or a foam material. For the dimension of the wrapping performance of the seat, the wrapping performance of the seat is mainly represented in side wing design of the seat. Proper side wing design enables an outer side of a thigh and a side of a human body to be properly wrapped when the vehicle is making a turn, thereby providing the user with a proper lateral support force. For the dimension of the support performance of the seat, the support performance of the seat needs to provide support for the back, waist, and legs separately to alleviate the user's fatigue.

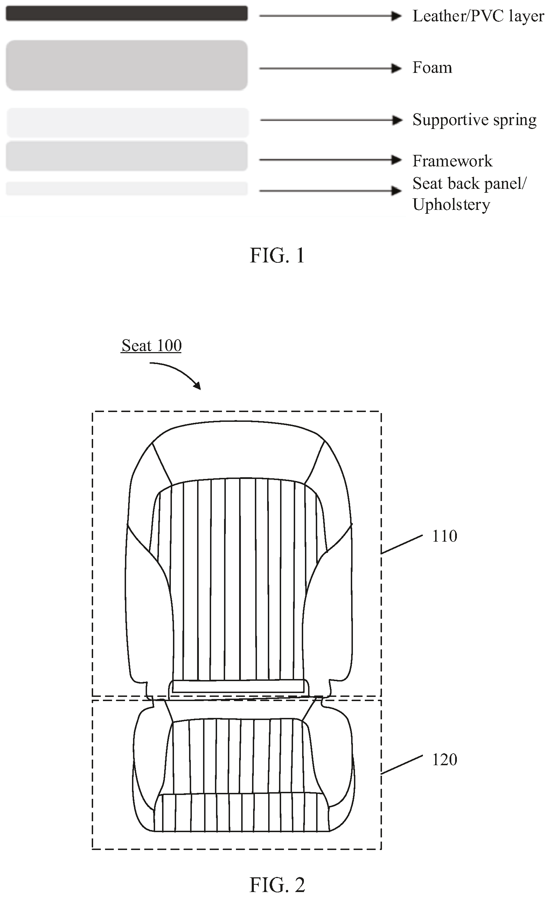

For example, FIG. 1 shows a conventional laminated structure of a seat. The conventional laminated structure of the seat may include a leather or polyvinyl chloride (polyvinyl chloride, PVC) layer, a foamed layer, a supportive backrest spring layer, a framework layer, and a seat back panel (where the seat back panel may be covered with an upholstery). The conventional laminated structure of the seat cannot well satisfy requirements on the softness and support performance of the seat. Because this structure provides comfort by merely using foam beneath the leather or PVC layer, the single layer of foam cannot well satisfy a user's requirement for the seat, resulting in the seat being too hard or too soft or the like. If the seat is too hard, the seat cannot satisfy the user's requirement on softness. If the seat is too soft, the seat cannot satisfy the user's requirement on support performance.

To better satisfy the user's requirement on the comfort of the seat, an embodiment of this application provides a seat. The seat has a highly comfortable laminated structure. The laminated structure enables a passenger seated to have a soft touch feeling of the seat, and can also maintain desirable support performance of the seat, to avoid seat discomfort caused by collapse due to insufficient support from the seat, thereby achieving a good effect of comfort when the passenger is seated.

The seat provided in this embodiment of this application includes a backrest and a seat cushion. For example, FIG. 2 is an example diagram of a seat 100. It can be learned that the seat 100 includes a backrest 110 and a seat cushion 120.

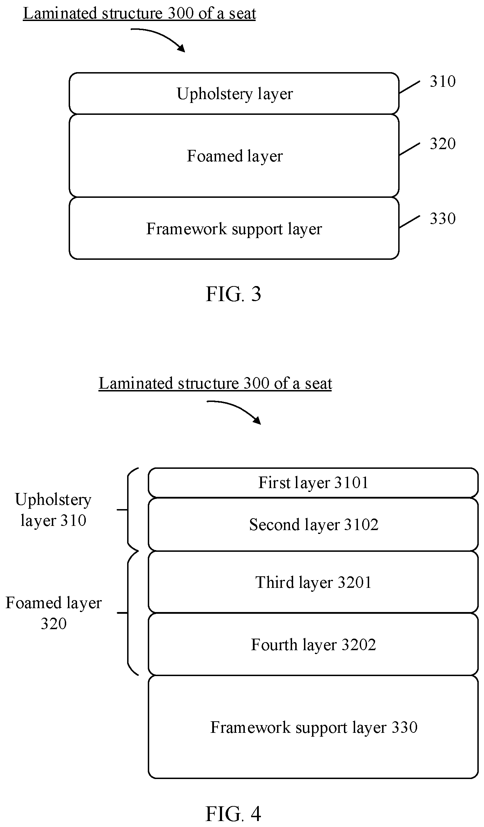

The backrest and the seat cushion of the seat provided in this embodiment of this application are of a laminated structure, and both include an upholstery layer, a foamed layer, and a framework support layer. For example, FIG. 3 shows an example laminated structure 300 of the seat. The laminated structure 300 of the seat includes an upholstery layer 310, a foamed layer 320, and a framework support layer 330. The upholstery layer 310 is an uppermost layer of the laminated structure 300 of the seat, and is a layer that is directly in contact with a user. The foamed layer 320 is an intermediate layer of the laminated structure 300 of the seat, and is mainly configured to satisfy the user's requirement on softness, and may further take into account the user's requirement on support performance. For details, refer to the following description. Details are not described herein. The framework support layer 330 is a bottom layer of the laminated structure 300 of the seat (optionally, the framework support layer 330 may be covered with an upholstery), and is mainly configured to provide strong support. In other words, the foamed layer 320 is located between the upholstery layer 310 and the framework support layer 330.

In a possible implementation, for example, refer to FIG. 4. It can be learned from FIG. 4 that the upholstery layer 310 may include a first layer 3101 and a second layer 3102. The foamed layer 320 may include a third layer 3201 and a fourth layer 3202.

For example, the first layer 3101 includes a leather material, a polyurethane material, a polyvinyl chloride material, or a braided material. The polyurethane material may be, for example, a water-based polyurethane (polyurethane, PU) material. The braided material is, for example, cotton, flax, plant fiber, man-made fiber, wool, or the like. This is not limited in embodiments of this application. For example, a thickness of the first layer 3101 may be, for example, 1-3 millimeters (mm). It may be understood that a thickness of each layer described in embodiments of this application is merely an example, and does not constitute a limitation on embodiments of this application.

For example, the second layer 3102 includes a first sponge. For example, the first sponge may be, for example, a ventilation sponge. In a possible implementation, the second layer 3102 and the first layer 3101 may form the upholstery layer 310 in a manner of a composite layer. For example, a thickness of the second layer 3102 may be, for example, 3-15 mm.

For example, the third layer 3201 includes a second sponge. For example, the second sponge may be, for example, a high-elasticity sponge (or also referred to as a high-resilience sponge). For example, resilience of the second sponge is higher than resilience of the first sponge. For example, a thickness of the third layer 3201 may be, for example, 10-30 mm.

For example, the fourth layer 3202 includes foam. For example, the foam may be, for example, supportive foam. The supportive foam may be, for example, foamed resin or polyethylene foam. For example, a thickness of the fourth layer 3202 may be, for example, 20-50 mm. In embodiments of this application, the foam may also be referred to as a sponge.

In a possible implementation, an amount of indentation of the fourth layer 3202 may reach 15% to 25%. For example, the amount of indentation may reach 20%.

In the implementation shown in FIG. 4, the upholstery layer 310 includes the first layer using soft surface material, and the ventilation sponge with proper softness is composited on the surface material of the first layer. In addition, the soft high-elasticity sponge is disposed in the foamed layer 320 beneath the upholstery layer 310, thereby implementing a proper soft feeling of a surface of the seat. Supportive foam is arranged beneath the high-elasticity sponge to provide proper support, thereby improving the comfort of the seat.

In a possible implementation, a material of the third layer 3201 and that of the fourth layer 3202 may be, for example, a polyurethane (polyurethane, PUR) material. In comparison with the fourth layer 3202, the third layer 3201 is closer to the upholstery layer 310. Foaming hardness of the second sponge in the third layer 3201 is less than foaming hardness of the foam in the fourth layer 3202, to better provide the user with a soft feeling of the surface of the seat. For example, the soft high-elasticity sponge is close to the upholstery layer 310 to better provide the user with a soft feeling of the surface of the seat. In addition, the supportive foam with high foaming hardness beneath the high-elasticity sponge can further provide support.

In a possible implementation, a material of the second layer 3102 and that of the third layer 3201 may be, for example, a PUR material. Foaming hardness of the first sponge in the second layer 3102 may be less than foaming hardness of the second sponge in the third layer 3201. In this implementation, because the second layer 3102 is closer to the user, the first sponge in the second layer 3102 is softer than the second sponge in the third layer 3201, so that the user can have better ride experience.

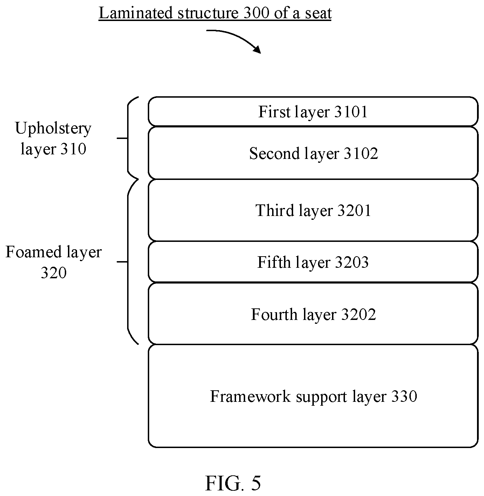

In a possible implementation, for example, refer to FIG. 5. It can be learned from FIG. 5 that the foamed layer 320 further includes a fifth layer 3203.

For example, the fifth layer 3203 may be three-dimensional plastic braided fabric (3D Muller). The three-dimensional plastic braided fabric has a good ventilation effect, and therefore can improve ventilation of the seat. For example, a thickness of the fifth layer 3203 may be, for example, 10-30 mm.

In a possible implementation, as shown in FIG. 5, the fifth layer 3203 is located between the third layer 3201 and the fourth layer 3202.

In a possible implementation, in FIG. 5, positions of the fourth layer 3202 and the fifth layer 3203 may be exchanged. The positions of the two layers may specifically be arranged based on actual application. This is not limited in embodiments of this application.

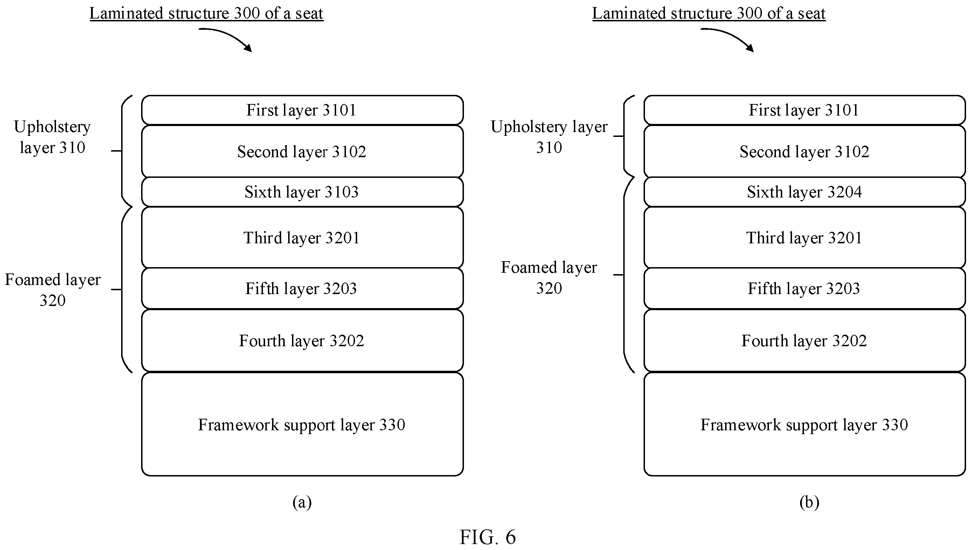

In a possible implementation, for example, refer to FIG. 6. It can be learned from FIG. 6 that the laminated structure 300 of the seat may further include a sixth layer. The sixth layer includes a heating pad. For example, a thickness of the sixth layer may be, for example, 1-3 mm.

For example, the sixth layer may be disposed in the upholstery layer 310. Refer to a sixth layer 3103 in (a) in FIG. 6. Alternatively, for example, the sixth layer may be disposed in the foamed layer 320. Refer to a sixth layer 3204 in (b) in FIG. 6. If the sixth layer 3204 is disposed in the foamed layer 320, the sixth layer 3204 may be disposed close to the upholstery layer 310, to better supply heating to the user.

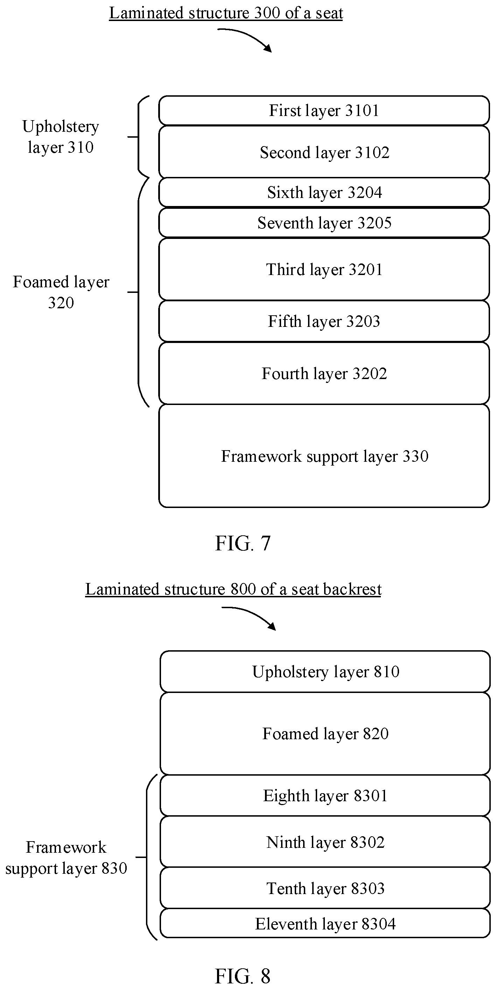

In a possible implementation, for example, refer to FIG. 7. FIG. 7 shows an example in which the sixth layer is disposed in the foamed layer 320. Disposing the sixth layer in the upholstery layer 310 is similar. Details are not described again. It can be learned from FIG. 7 that the foamed layer 320 may further include a seventh layer 3205.

For example, the seventh layer 3205 includes a massage air bag. As shown in FIG. 7, the seventh layer 3205 is disposed close to the upholstery layer 310, to better provide the user with a massage function. For example, a thickness of the seventh layer 3205 may be, for example, 5-10 mm.

In a possible implementation, an amount of indention of a portion including the upholstery layer 310, the third layer 3201, and the seventh layer 3205 may reach 60% to 75%. For example, the amount of indention may reach 70%.

In a possible implementation, in FIG. 7, positions of the seventh layer 3205 and the third layer 3201 may be exchanged. The positions of the two layers may specifically be arranged based on actual application. This is not limited in embodiments of this application.

In a possible implementation, for example, refer to FIG. 8. FIG. 8 shows an example of a laminated structure 800 of the backrest of the seat. For an upholstery layer 810 included in the laminated structure 800 of the backrest of the seat, for example, refer to the upholstery layer 310 shown in any one of FIG. 4 to FIG. 7 and the possible implementations thereof. For a foamed layer 820 included in the laminated structure 800 of the backrest of the seat, for example, refer to the foamed layer 320 shown in any one of FIG. 4 to FIG. 7 and the possible implementations thereof.

A framework support layer 830 included in the laminated structure 800 of the backrest of the seat may include an eighth layer 8301, a ninth layer 8302, a tenth layer 8303, and an eleventh layer 8304.

For example, the eighth layer 8301 includes a lumbar support. For example, the lumbar support may be, for example, an electrically adjustable pneumatic lumbar support. For example, a thickness of the eighth layer 8301 may be, for example, 5-7 mm.

For example, the ninth layer 8302 includes a backrest spring. For example, a thickness of the ninth layer 8302 may be, for example, 3-7 mm.

For example, the tenth layer 8303 includes a steel framework. For example, a thickness of the tenth layer 8303 may be, for example, 25-35 mm.

For example, the eleventh layer 8304 includes a seat back panel. For example, a thickness of the eleventh layer 8304 may be, for example, 3-5 mm.

The eighth layer 8301, the ninth layer 8302, the tenth layer 8303, and the eleventh layer 8304 may provide a great support force, to prevent the seat from collapsing or severely deforming when the user is seated. In addition, the electric adjustable pneumatic lumbar support of the eighth layer 8301 can also protect the user's lumbar vertebra and reduce fatigue during driving.

In a possible implementation, the eighth layer 8301 and/or the ninth layer 8302 may be removed from the framework support layer 830. In other words, the framework support layer 830 may not be provided with the electrically adjustable pneumatic lumbar support and/or the backrest spring, to reduce costs.

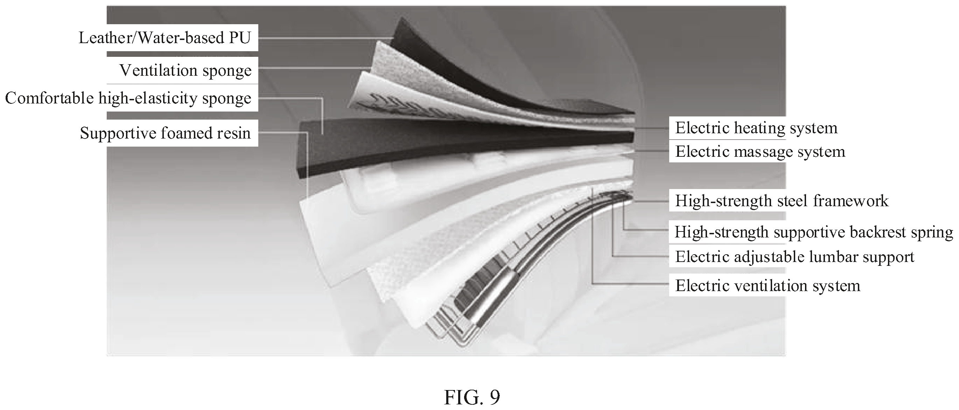

In a possible implementation, for ease of understanding the foregoing laminated structure of the backrest, for example, refer to FIG. 9. FIG. 9 is an example diagram of a possible physical laminated structure of the backrest. In the physical laminated structure, leather/water-based PU is the first layer 3101, a ventilation sponge is the second layer 3102, a comfortable high-elasticity sponge is the third layer 3201, supportive foamed resin is the fourth layer 3202, an electric heating system is the sixth layer 3103 or the sixth layer 3204, an electric massage system is the seventh layer 3205, a ventilation system is the fifth layer 3203, an electric adjustable lumbar support is the eighth layer 8301, a high-strength supportive backrest spring is the ninth layer 8302, and a high-strength steel framework is the tenth layer 8303. It may be understood that the structure shown in FIG. 9 is merely an example. In specific implementation, more or fewer layers may be included and specifically arranged based on an actual application requirement. This is not limited in embodiments of this application.

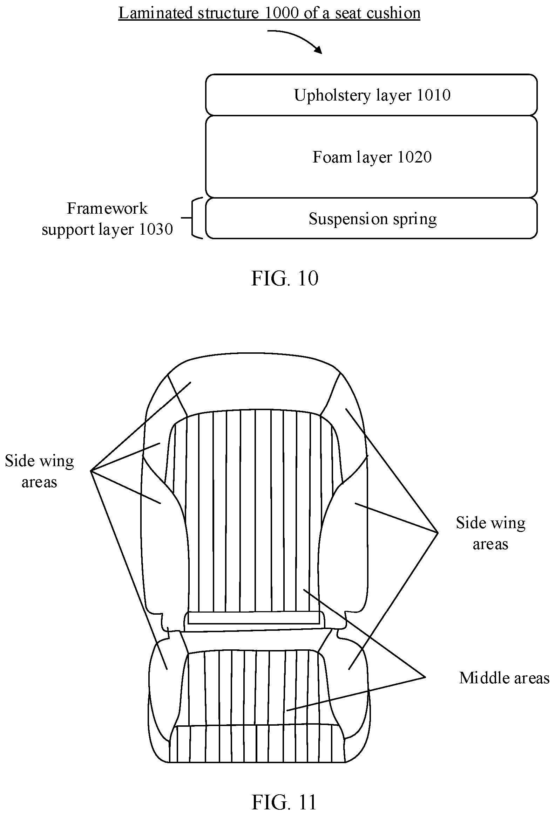

In a possible implementation, for example, refer to FIG. 10. FIG. 10 shows an example of a laminated structure 1000 of the seat cushion. For an upholstery layer 1010 included in the laminated structure 1000 of the seat cushion, for example, refer to the upholstery layer 310 shown in any one of FIG. 4 to FIG. 7 and the possible implementations thereof. For a foamed layer 1020 included in the laminated structure 1000 of the seat cushion, for example, refer to the foamed layer 320 shown in any one of FIG. 4 to FIG. 7 and the possible implementations thereof. A framework support layer 1030 included in the laminated structure 1000 of the seat cushion may include a suspension spring to provide the user with support. For example, a thickness of the suspension spring may be, for example, 3-7 mm.

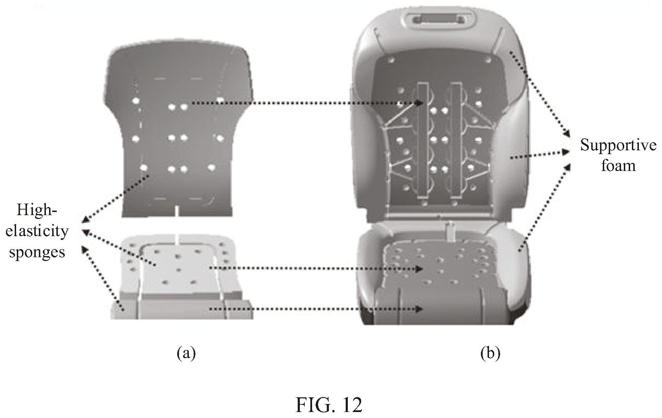

In a possible implementation, for example, refer to FIG. 11. A seat provided in this embodiment of this application includes side wing areas and middle areas, and the middle areas are surrounded by the side wing areas, as shown in FIG. 11. In specific implementation, the supportive foam in the fourth layer 3202 may be disposed in the side wing areas of the seat. The high-elasticity sponge in the third layer 3201 may be further disposed in the middle areas. In this implementation, the soft high-elasticity sponge is disposed in areas (the middle areas of the backrest and the seat cushion) that are in contact with a human body, to ensure a soft feeling in the areas that are in contact with the human body. In the side wing area that provides a support function, supportive hard foam is arranged to implement proper wrapping performance of the seat, so that an outer side of a thigh and a side of the body are wrapped when a vehicle is making a turn, thereby providing the user with a proper lateral support force. For more intuitive presentation of materials used in the side wing areas and the middle areas, for example, refer to FIG. 12.

A structure shown in (a) in FIG. 12 includes high-elasticity sponges. This structure may be disposed in the middle areas of the seat, for example, as shown in (b) of FIG. 12. In addition, as shown in (b) in FIG. 12, supportive foam is arranged in the side wing areas of the seat to provide a supporting function, to implement proper wrapping performance of the seat, so that the outer side of the thigh and the side of the body are wrapped when the vehicle is making a turn, thereby providing the user with a proper lateral support force.

In conclusion, the seat provided in embodiments of this application has the following advantages.

For proper surface softness, the soft material (refer to the description of the first layer 3101) is used as the material of the seat upholstery, the ventilation sponge with proper softness is composited on the surface material, and the comfortable high-elasticity sponge is arranged beneath the laminated layer of the seat upholstery. The very soft surface material, the soft ventilation sponge, and the high-elasticity sponge together provide surface softness.

To ensure that the seat provides a feeling of support in a long ride, proper supportive foam (for example, foamed resin) is arranged beneath the comfortable high-elasticity sponge, and a strongly supportive 3D Muller ventilation layer system is arranged. The high-elasticity supportive suspension spring and the high-strength steel framework are employed, to provide a support force to prevent the seat from collapsing or severely deforming when a passenger is seated.

To meet comfort requirements such as ventilation, heating, and massage, original comfort layer parts for ventilation, heating, and massage are arranged in order in the laminated layers of the seat.

It should be understood that sequence numbers of processes do not mean execution sequences in embodiments of this application. The execution sequences of the processes shall be determined based on functions and internal logic of the processes, and shall not be construed as any limitation on the implementation processes of embodiments of this application.

It should be further understood that, when being used in the specification, a term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily mean a same embodiment. In addition, these particular features, structures, or characteristics may be combined in one or more embodiments by using any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A seat, wherein the seat comprises an upholstery layer, a foamed layer, and a framework support layer, and the foamed layer is located between the upholstery layer and the framework support layer;
the upholstery layer comprises a first layer and a second layer, the first layer comprises a leather material, a polyurethane material, a polyvinyl chloride material, or a braided material, and the second layer is a first sponge; and
the foamed layer comprises a third layer and a fourth layer, the third layer comprises a second sponge, and the fourth layer comprises foam.

2. The seat according to claim 1, wherein the third layer is closer to the upholstery layer than the fourth layer, and foaming hardness of the second sponge is less than foaming hardness of the foam.

3. The seat according to claim 1 or 2, wherein foaming hardness of the first sponge is less than the foaming hardness of the second sponge.

4. The seat according to any one of claims 1 to 3, wherein the foamed layer further comprises a fifth layer, and the fifth layer comprises three-dimensional plastic braided fabric.

5. The seat according to claim 4, wherein the fifth layer is located between the third layer and the fourth layer.

6. The seat according to any one of claims 1 to 5, wherein the upholstery layer or the foamed layer further comprises a sixth layer, and the sixth layer comprises a heating pad.

7. The seat according to any one of claims 1 to 6, wherein the foamed layer further comprises a seventh layer, and the seventh layer comprises a massage air bag.

8. The seat according to any one of claims 1 to 7, wherein the seat comprises a backrest, the backrest comprises the upholstery layer, the foamed layer, and the framework support layer, the framework support layer of the backrest comprises an eighth layer and/or a ninth layer, the eighth layer comprises a lumbar support, and the ninth layer comprises a backrest spring.

9. The seat according to any one of claims 1 to 7, wherein the seat comprises a seat cushion, the seat cushion comprises the upholstery layer, the foamed layer, and the framework support layer, and the framework support layer of the seat cushion comprises a suspension spring.

10. The seat according to any one of claims 1 to 9, wherein the foam in the fourth layer is disposed in side wing areas of the seat, and the second sponge in the third layer is disposed in middle areas surrounded by the side wing areas.

11. The seat according to any one of claims 1 to 10, wherein the foam in the fourth layer is foamed resin or polyethylene foam.

12. A vehicle, wherein the vehicle comprises the seat according to any one of claims 1 to 11.
